# FASCICULE DE BREVET EUROPEEN

(11) **EP 3 375 271 B1**
(45) Date de publication et mention de la délivrance du brevet: **08.01.2020**
(21) Numéro de dépôt: 18305280.2
(22) Date de dépôt: 15.03.2018
(51) Int. Cl.: A01B 21/08, A01B 49/02

(54) **MACHINE AGRICOLE DE PRÉPARATION DU SOL COMPRENANT DEUX TRAINS DE DISQUES MUTUELLEMENT DÉCALÉS ET RÉGLABLES EN POSITION DANS LA DIRECTION D'AVANCE**
LANDWIRTSCHAFTLICHE MASCHINE ZUR BODENBEARBEITUNG, DIE MINDESTENS ZWEI WECHSELSEITIG VERSETZTE SCHEIBENREIHEN UMFASST, DEREN POSITION IN VORWÄRTSRICHTUNG VERSTELLBAR IST
AGRICULTURAL SOIL PREPARATION MACHINE COMPRISING TWO MUTUALLY OFFSET DISC TRAINS WITH ADJUSTABLE POSITION IN THE FORWARD DIRECTION

(30) Priorité: 17.03.2017 FR 1752181
(43) Date de publication de la demande: 19.09.2018
(73) Titulaire: Kuhn-Huard S.A., 44142 Châteaubriant (FR)
(72) Inventeur: CAVALON, Anthony, 56910 SAINT NICOLAS DU TERTRE (FR); BOUTIN, Gérald, 44520 ISSE (FR); BOUCHET, Yoann, 44110 CHATEAUBRIANT (FR); LEDIG, Thierry, 44110 CHATEAUBRIANT (FR)
(74) Mandataire: Nuss, Laurent

(56) Documents cités:
- EP-A2- 2 061 300
- WO-A1-2004/004437
- DE-A1-102007 036 014
- US-A- 1 760 569

## Description

La présente invention concerne le domaine du machinisme agricole, plus particulièrement les machines de traitement du sol, notamment les machines de préparation du sol après récolte et avant semis, telles que les déchaumeurs à disques.

L'invention a pour objet une telle machine agricole, portée ou tractée, pouvant s'adapter à différentes conditions de travail, en vue de réaliser un traitement efficace tout en autorisant une vitesse de travail élevée.

On connaît déjà, dans l'état de la technique, différentes réalisations de machines agricoles du type précité, par exemple par le document EP 2 061 300.

Par ailleurs, le demanderesse fabrique et commercialise des déchaumeurs à disques indépendants sous la dénomination OPTIMER (nom déposé).

Ces machines connues de traitement du sol comprennent généralement un châssis et au moins deux trains d'outils de travail sous forme de disques rotatifs, chaque train formant un alignement d'outils en une ou plusieurs parties s'étendant sensiblement transversalement par rapport à la direction normale d'avance de la machine en utilisation. Lesdits trains sont mutuellement décalés dans la direction d'avance, l'ensemble des outils d'un train donné, ou d'une partie de train au moins, étant monté directement ou indirectement sur un membre support commun relié au châssis.

Les disques rotatifs sont par exemple montés par des moyeux et des roulements sur des bras de guidage, eux-mêmes fixés sur un membre support allongé, tel qu'une poutre transversale ou une traverse pour former ensemble un train de disques.

Les différents (généralement deux) trains de disques peuvent être arrangés parallèlement entre eux et perpendiculairement à la direction d'avance normale de la machine en utilisation, mais pas nécessairement. Ils peuvent également être inclinés l'un par rapport à l'autre et/ou par rapport à la direction d'avance.

Les disques rotatifs, solidarisés rigidement ou non à leur support, présentent un certain angle d'attaque, qui détermine la qualité du travail du sol par ces disques, de forme généralement concave/convexe et pourvus de dents sur leur périphérie.

En outre, ces trains de disques rotatifs peuvent être d'un seul tenant (faible largeur de travail) ou être segmentés en au moins deux ou trois parties (grande largeur de travail), éventuellement reliées de manière articulée entre elles.

L'action de telles machines, dite déchaumage, est une opération culturale avec de multiples objectifs, à savoir :
- créer un lit de semence (faux semis pour les repousses et les adventices),
- faire dégrader les résidus de récolte,
- préparer les futures interventions (semis),
- niveler le sol,
- stopper l'évaporation,
- réduire les populations de ravageurs.

Toutefois, durant leur mise en œuvre, il a été constaté que ce type de machines de traitement du sol peut créer des vagues / ondulations liées à une projection particulière de la terre du premier train de disques vers le deuxième à une vitesse donnée. Ce phénomène peut créer de l'instabilité latéralement comme verticalement ainsi que des bourrages en présence de débris végétaux. De ce fait, on constate un mélange terre / résidus non homogène, ce qui rend le lit de semence défavorable à la germination. Lorsque ces phénomènes se présentent la seule solution pour l'utilisateur est de modifier la vitesse d'avance puisqu'une modification de la profondeur de travail n'est pas souhaitée, pour des raisons agronomiques. En revanche, cette réduction de vitesse impacte directement la qualité de travail et le débit de chantier.

Par les documents WO 2004/004437, US 1 760 569, DE 10 2007 036014 et EP 2 061 300, on connaît déjà une machine agricole telle que décrite en introduction à la présente.

Ces machines présentent aussi des dispositifs permettant de modifier l'écartement entre les trains d'outils. Toutefois, en fonction de la position relative desdits trains d'outils, par rapport au châssis et entre eux, la qualité du travail fourni et l'épaisseur de traitement varient, ce qui est préjudiciable à une bonne homogénéité de la préparation du sol.

Compte tenu de ce qui précède, le but principal de l'invention est de proposer une machine pouvant s'adapter aux différentes conditions de travail (flux de terre, quantité de résidus, ...), en créant et en maintenant un mélange terre / résidus homogène, et permettant de préserver une bonne qualité de travail et/ou de conserver une épaisseur de traitement déterminé, c'est-à-dire de créer un lit de semence homogène, ce tout en maintenant une vitesse d'avance optimum pour l'agriculteur.

A cet effet, l'invention a pour objet une machine agricole de traitement du sol telle qu'évoquée en introduction à la présente, et qui est caractérisée en ce que l'un au moins des membres supports est relié au châssis par l'intermédiaire d'au moins une liaison mécanique déformable, autorisant une modification de la position relative du train, ou de la partie de train, considéré(e) par rapport au châssis dans la direction d'avance, ce sous l'action d'au moins un organe de réglage, par exemple manuel, assisté ou motorisé.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue de dessus et en perspective d'une machine agricole de traitement du sol, selon une première variante d'un premier mode de réalisation de l'invention (train avant réglable - deux liaisons déformables avec le châssis et deux organes de réglage de l'écartement-vérins) ;
les figures 2 et 3 sont des vues en élévation latérale de la machine représentée figure 1, avec les deux trains en position rapprochée (figure 2) et en position écartée (figure 3) respectivement ;
la figure 4 est une vue de dessus de la machine de la figure 1 dans une configuration écartée des deux trains d'outils (conforme à la figure 3), l'attelage ayant été enlevé ;
la figure 5 est une vue de dessus similaire à la figure 4 d'une machine agricole de traitement du sol selon une seconde variante du premier mode de réalisation de l'invention (train avant réglable - une liaison déformable avec le châssis et un actionneur type vérin associé) ;
la figure 6 est une vue de dessus similaire à la figure 4 et à la figure 5 d'une machine agricole de traitement du sol selon une troisième variante du premier mode de réalisation de l'invention (train arrière réglable - deux liaisons déformables avec le châssis et un unique actionneur centré type bielle tirant), et,
les figures 7 et 8 sont des vues en élévation latérale, dans deux configurations d'écartement différentes entre trains avant et arrière, d'une machine agricole de traitement du sol selon un second mode de réalisation de l'invention (train avant réglable - liaison châssis - train avant sous forme d'une cinématique à balancier actionné par un vérin bidirectionnel).

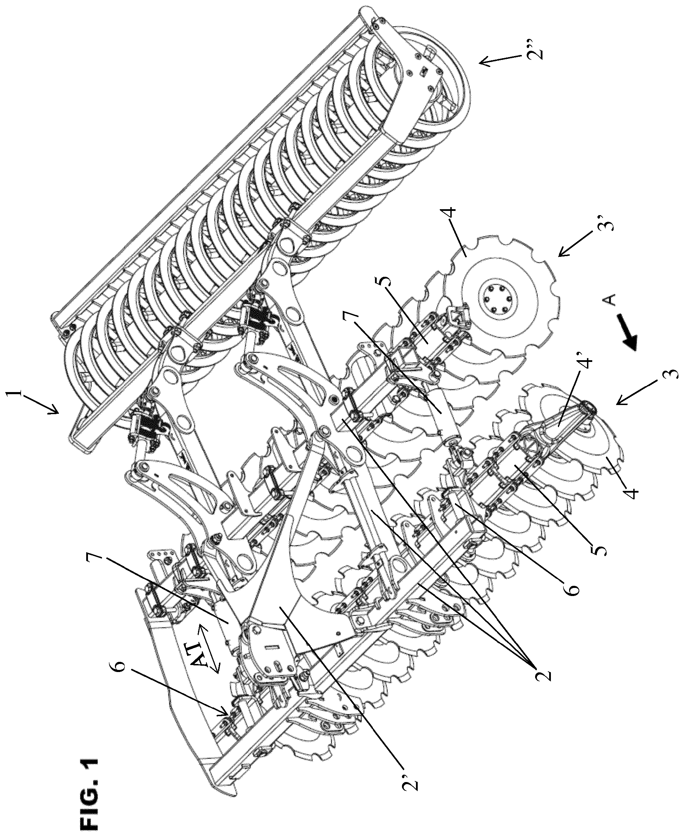

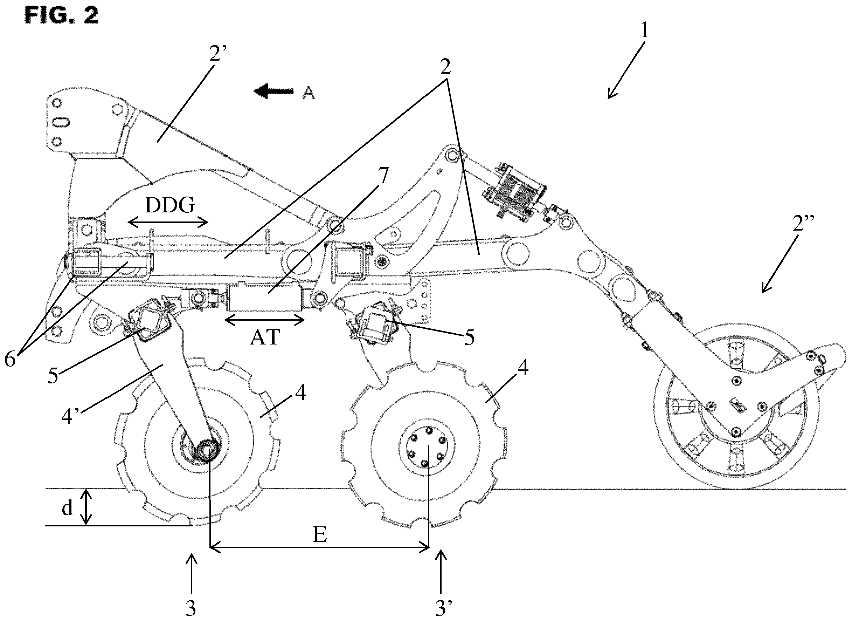

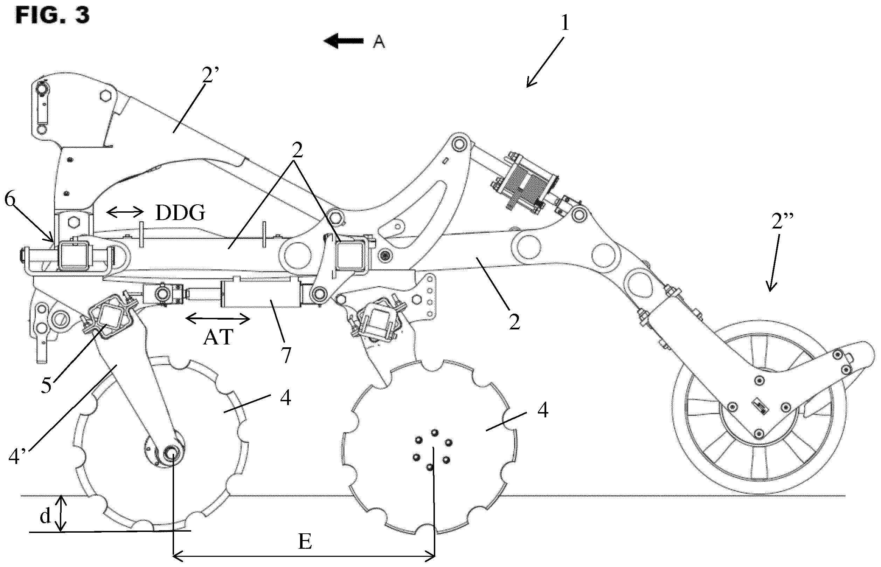

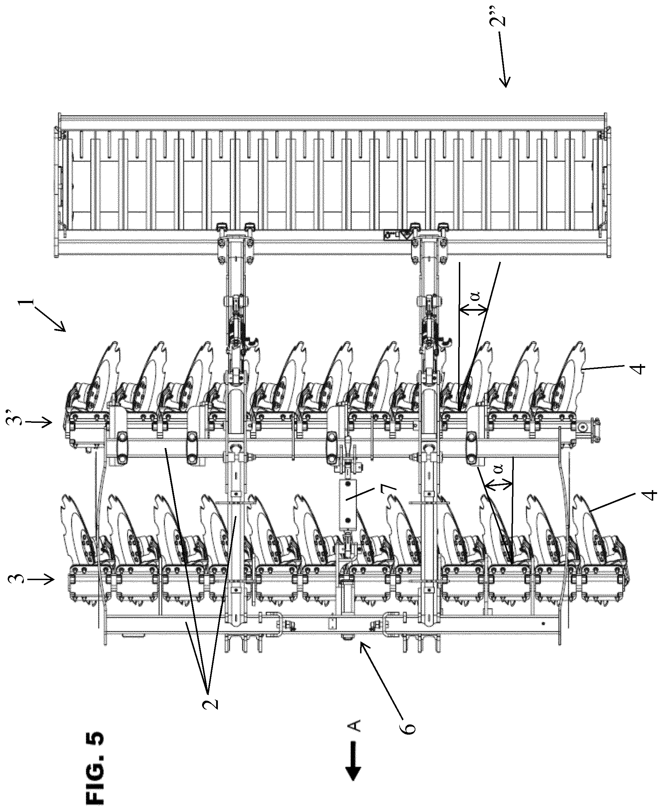

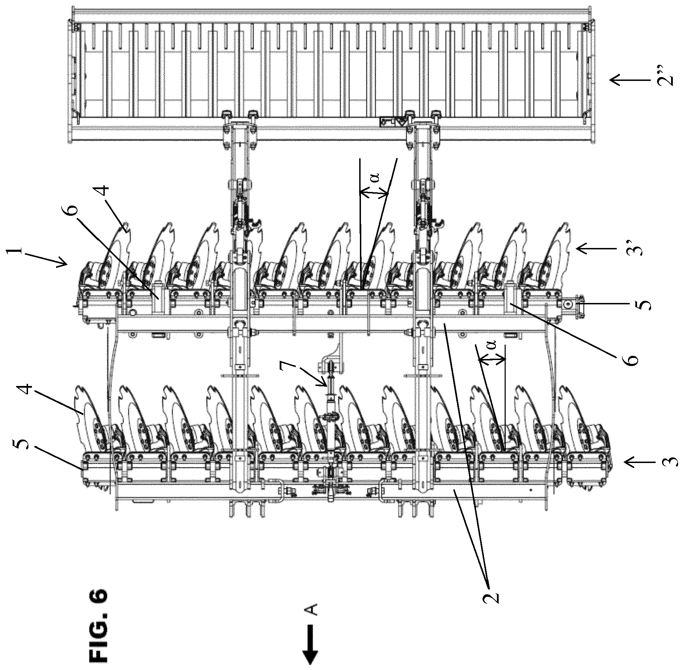

Les figures 1 à 8 des dessins annexés montrent une machine agricole 1 de traitement du sol comprenant un châssis 2 et au moins deux trains 3, 3' d'outils de travail 4 sous forme de disques rotatifs. Chaque train 3, 3' forme un alignement d'outils 4 en une ou plusieurs parties s'étendant sensiblement transversalement par rapport à la direction normale d'avance A de la machine 1 en utilisation et lesdits trains 3, 3' sont mutuellement décalés dans la direction d'avance A, l'ensemble des outils 4 d'un train 3, 3' donné, ou d'une partie de train au moins, étant monté directement ou indirectement sur un membre support 5 commun relié au châssis 2. Dans les réalisations représentées, les deux trains 3, 3' de disques sont arrangés parallèlement entre eux. Dans une alternative, les deux trains de disques peuvent être arrangés de manière inclinée l'un par rapport à l'autre et/ou par rapport à la direction d'avance A.

Conformément à l'invention, l'un au moins des membres supports 5 est relié au châssis 2 par l'intermédiaire d'au moins une liaison mécanique déformable 6, autorisant une modification de la position relative du train 3, 3', ou de la partie de train, considéré(e) par rapport au châssis 2 dans la direction d'avance A, ce sous l'action d'au moins un organe de réglage 7, manuel ou assisté. Cet organe peut être avantageusement alimenté en puissance, et consiste préférentiellement en un vérin ou un tirant mécanique, hydraulique ou électrique.

Grâce à l'invention, il est possible d'adapter aisément la configuration de la machine 1 aux conditions de travail rencontrées sur le terrain. En effet, en modifiant l'écartement entre les trains 3, 3' d'outils 4, par modification de la configuration de la ou des liaison(s) déformables(s) 6, on évite les conséquences néfastes (mélanges terre/résidus végétaux non homogène, vagues, instabilité de machine, bourrages...), en gardant la vitesse optimum.

Préférentiellement, la déformation de la ou des liaison(s) mécanique(s) 6, sous l'action de l'organe ou des organes de réglage 7, préserve l'angle d'attaque α des outils 4, sous forme de disques rotatifs, qui appartiennent au train 3, 3' concerné par la modification de position relative induite.

En variante ou de manière additionnelle, il peut être prévu que la déformation de la ou des liaison(s) mécanique(s) 6, sous l'action de l'organe ou des organes de réglage 7, préserve, au moins en considérant les deux positions extrêmes de déplacement, la profondeur de travail d des outils 4, sous forme de disques rotatifs, qui appartiennent au train 3, 3' concerné par la modification de position relative induite.

Ainsi, la qualité de travail des outils 4 est préservée, malgré une modification de la configuration de travail de la machine 1.

Plus précisément, il peut être prévu que ladite au moins une liaison déformable 6 soit configurée pour réaliser, sous l'action contrôlée d'au moins un organe de réglage 7 commandé, un déplacement guidé du train d'outils 3, 3' ou de la partie de train 3, 3' considéré(e), ce parallèlement à la direction d'avance A et relativement par rapport au châssis 2 et à un(e) autre train ou partie de train 3, 3', de manière à modifier leur écartement relatif dans la direction d'avance A.

On peut noter que, avec cette construction de la ou des liaison(s) déformable(s) 6, le déplacement effectué pour passer d'une configuration à une autre (modification de l'écartement E entre trains 3, 3') n'affecte pas l'angle d'attaque des disques 4, et donc la qualité de travail de ces derniers. De plus, la profondeur de travail d des outils 4 du train 3, 3' déplacé est maintenue constante, le déplacement réalisé pour modifier l'écartement s'effectuant aussi parallèlement au sol.

Le châssis 2 de la machine 1 peut par exemple consister en deux poutres transversales reliées par des longerons. L'attelage 2' est fixé sur ou fait partie du châssis 2 et ce dernier peut également porter sur l'arrière au moins un équipement supplémentaire 2" comprenant, par exemple, un outil de travail du sol, tel que par exemple une herse relevable, et/ou un moyen de roulement réglable.

En accord avec un premier mode de réalisation, ressortant des figures 1 à 6, la ou l'une au moins des liaisons déformables avec guidage 6 consiste en une liaison à glissière.

En accord avec un second mode de réalisation de l'invention, la ou l'une au moins des liaisons déformables avec guidage 6 consiste en une cinématique à balancier, par exemple constituée de deux biellettes 8 reliées par des liaisons pivots 8' au châssis 2 d'une part, et au membre support 5 du train ou de la partie concernée du train, d'autre part. Cette cinématique à balancier représente un quadrilatère. Lorsque les deux biellettes 8 sont parallèles entre elles, la cinématique à balancier est avantageusement un parallélogramme.

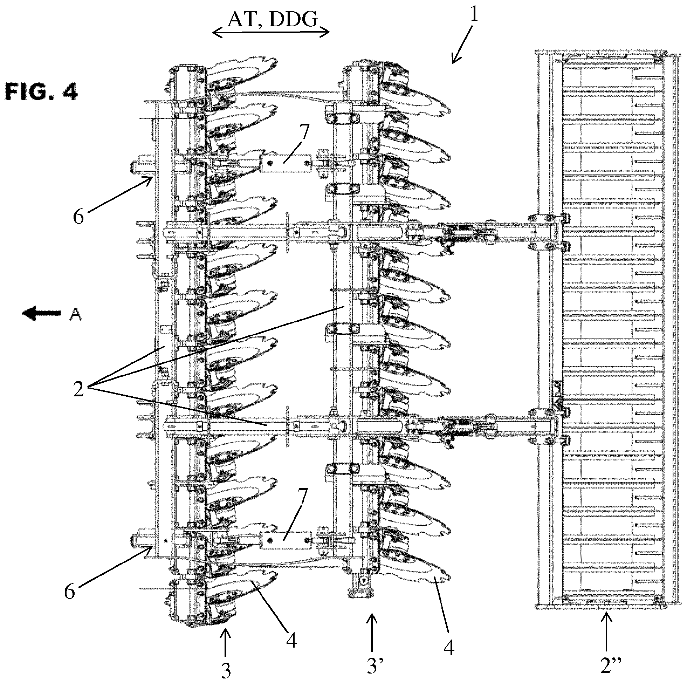

En cas de pluralité de liaisons 6 et de trains 3, 3' ajustables en position selon A, toutes celles associées à un train donné sont préférentiellement du même type, par exemple coulissantes à glissières ou translatives par déformation (cf. par exemple figures 1 et 4).

Selon une caractéristique constructive préférée, autorisant une construction simple et robuste et une commande groupée et à distance, ainsi qu'un grand confort d'utilisation et éventuellement une automatisation de l'adaptation de la machine 1, le ou chaque organe de réglage 7 est de type translatif, dont la direction d'actionnement translatif AT est avantageusement parallèle à la direction de déplacement DDG résultant d'une déformation guidée de la ou des liaisons 6 reliant le train 3, 3' d'outils 4 ou la partie de train 3, 3' considéré(e) et le châssis 2.

En vue d'aboutir à un guidage amélioré du ou des trains 3, 3', notamment en termes de précision et de robustesse, il peut être prévu que le ou les train(s) 3, 3' d'outils 4 mobile(s) par rapport au châssis 2 soi(en)t relié(s) au châssis 2 par deux liaisons déformables avec guidage 6, situées à proximité des extrémités latérales opposées du membre support 5 du train 3, 3' considéré, la déformation desdites liaisons 6 et donc le déplacement relatif du train 3, 3' considéré étant assurés par un unique organe de réglage 7 positionné sensiblement centralement par rapport au train 3, 3' considéré.

De même, pour aboutir à une commande et un actionnement améliorés, il peut être prévu que le ou les train(s) 3, 3' d'outils 4 mobile(s) par rapport au châssis 2 soi(en)t relié(s) au châssis 2 par au moins deux liaisons déformables avec guidage 6, à chaque liaison 6 étant associé un organe de réglage 7 translatif situé à proximité, l'axe d'actionnement AT de ce dernier étant avantageusement parallèle à la direction du déplacement DDG résultant d'une déformation de la liaison 6 associée considérée, ledit axe AT et ladite direction DDG étant préférentiellement situés dans un même plan vertical.

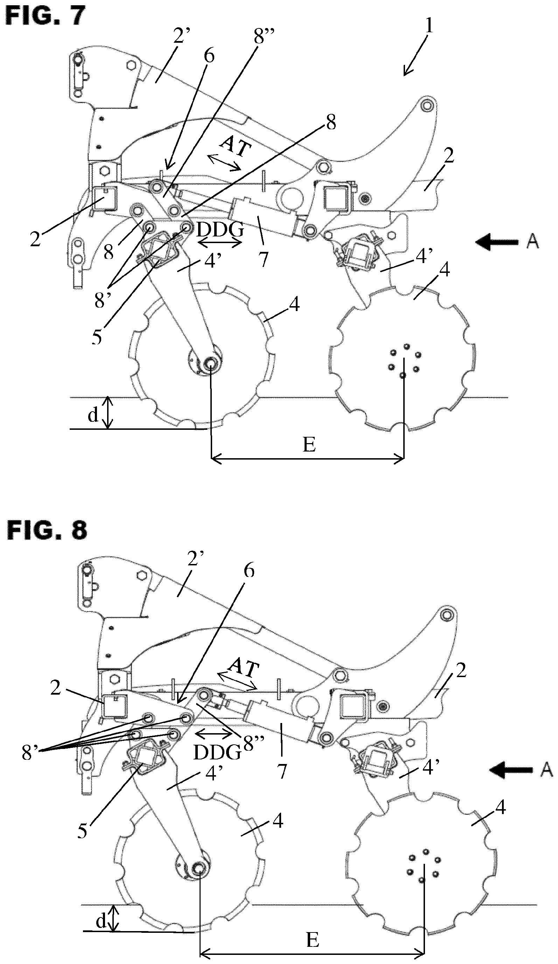

En relation avec le second mode de réalisation, ressortant des figures 7 et 8, il peut être prévu qu'un organe de réglage translatif 7 est associé à chaque liaison 6 sous forme de cinématique à balancier, ledit organe 7 étant relié de manière articulée avec un bras de levier 8" prolongeant ou solidaire d'une des biellettes 8 formant un côté de la cinématique à balancier, constituant un quadrilatère, préférentiellement un parallélogramme.

Avantageusement, et en accord avec une construction pratique exemplaire, chacun des outils 4, sous forme de disques rotatifs, est monté individuellement sur le membre support 5, par le biais d'un bras 4' et éventuellement par l'intermédiaire ou avec interposition d'au moins un élément déformable élastique. Selon une autre construction, les disques rotatifs peuvent être montés par paire sur un bras commun.

Dans une autre variante, les disques rotatifs 4 du train avant 3 ou du train arrière 3' sont fixés ensemble pour former un groupe et c'est l'ensemble du groupe qui est monté sur le membre support 5. Chaque groupe de disques est disposé avec une certaine orientation par rapport à la direction d'avance A de la machine en utilisation.

Les disques rotatifs 4, tels que représentés sur les figures, sont dentés. De manière alternative, les disques 4 peuvent être lisses, ondulés, de forme conique ou bombée ou de quelconque autre forme apportant un intérêt au bon travail du sol.

En accord avec une première variante de réalisation préférée, la machine agricole 1 comporte deux trains 3, 3' d'outils 4 dont l'un peut être déplacé relativement par rapport au châssis 2 et à l'autre train 3, 3' dans la direction d'avance A, sur une distance déterminée et avec blocage en position réglée.

En accord avec une seconde variante de réalisation préférée, la machine agricole 1 comporte deux trains 3, 3' d'outils 4 dont chacun peut être déplacé relativement par rapport au châssis 2.

## Revendications

1. Machine agricole (1) de traitement du sol comprenant un châssis (2) et au moins deux trains (3, 3') d'outils de travail sous forme de disques rotatifs, chaque train (3, 3') formant un alignement d'outils (4) en une ou plusieurs parties s'étendant sensiblement transversalement par rapport à la direction normale d'avance (A) de la machine (1) en utilisation et lesdits trains (3, 3') étant mutuellement décalés dans la direction d'avance (A), l'ensemble des outils (4) d'un train (3, 3') donné, ou d'une partie de train au moins, étant monté directement ou indirectement sur un membre support (5) commun relié au châssis (2),
l'un au moins des membres supports (5) étant relié au châssis (2) par l'intermédiaire d'au moins une liaison mécanique déformable (6), autorisant une modification de la position relative du train (3, 3'), ou de la partie de train, considéré(e) par rapport au châssis (2), ce sous l'action d'au moins un organe de réglage (7),
machine agricole (1) **caractérisée en ce que** la ou les liaison(s) mécanique(s) (6) est(sont) configurée(s) pour réaliser une modification de la position relative du train (3, 3') ou de la partie de train considéré(e) dans la direction d'avance (A), tout en préservant l'angle d'attaque (α) des outils (4), sous forme de disques rotatifs, qui appartiennent au train (3, 3') ou à la partie de train concerné(e) par la modification de position relative induite.

2. Machine agricole selon la revendication 1, **caractérisée en ce que** la ou les liaison(s) mécanique(s) (6) est(sont) configurée(s) pour que sa(leur) déformation, sous l'action de l'organe ou des organes de réglage (7), préserve, au moins en considérant les deux positions extrêmes de déplacement, la profondeur de travail (d) des outils (4), sous forme de disques rotatifs, qui appartiennent au train (3, 3') concerné par la modification de position relative induite.

3. Machine agricole selon l'une quelconque des revendications 1 et 2, **caractérisée en ce que** ladite au moins une liaison déformable (6) est configurée pour réaliser, sous l'action contrôlée d'au moins un organe de réglage (7) commandé, un déplacement guidé du train d'outils (3, 3') ou de la partie de train (3, 3') considéré(e), ce parallèlement à la direction d'avance (A) et relativement par rapport au châssis (2) et à un(e) autre train ou partie de train (3, 3'), de manière à modifier leur écartement relatif dans la direction d'avance (A).

4. Machine agricole selon l'une quelconque des revendications 1 à 3, **caractérisée en ce que** la ou l'une au moins des liaisons déformables avec guidage (6) consiste en une liaison à glissière.

5. Machine agricole selon l'une quelconque des revendications 1 à 4, **caractérisée en ce que** la ou l'une au moins des liaisons déformables avec guidage (6) consiste en une cinématique à balancier, par exemple constituée de deux biellettes (8) reliées par des liaisons pivots (8') au châssis (2) d'une part, et au membre support (5) du train ou de la partie concernée du train, d'autre part.

6. Machine agricole selon l'une quelconque des revendications 1 à 5, **caractérisée en ce que** le ou chaque organe de réglage (7) est de type translatif, dont la direction d'actionnement translatif (AT) est avantageusement parallèle à la direction de déplacement (DDG) résultant d'une déformation guidée de la ou des liaisons (6) reliant le train (3, 3') d'outils (4) ou la partie de train (3, 3') considéré(e) et le châssis (2).

7. Machine agricole selon l'une quelconque des revendications 1 à 6, **caractérisée en ce que** le ou les train(s) (3, 3') d'outils (4) mobile(s) par rapport au châssis (2) est (sont) relié(s) au châssis (2) par deux liaisons déformables avec guidage (6), situées à proximité des extrémités latérales opposées du membre support (5) du train (3, 3') considéré, la déformation desdites liaisons (6) et donc le déplacement relatif du train (3, 3') considéré étant assurés par un unique organe de réglage (7) positionné sensiblement centralement par rapport au train (3, 3') considéré.

8. Machine agricole selon l'une quelconque des revendications 1 à 6, **caractérisée en ce que** le ou les train(s) (3, 3') d'outils (4) mobile(s) par rapport au châssis (2) est (sont) relié(s) au châssis (2) par au moins deux liaisons déformables avec guidage (6), à chaque liaison (6) étant associé un organe de réglage (7) translatif situé à proximité, l'axe d'actionnement (AT) de ce dernier étant avantageusement parallèle à la direction du déplacement (DDG) résultant d'une déformation de la liaison (6) associée considérée, ledit axe (AT) et ladite direction (DDG) étant préférentiellement situés dans un même plan vertical.

9. Machine agricole selon la revendication 5 ou l'une quelconque des revendications 6 à 8 pour autant qu'elle dépende de la revendication 4, **caractérisée en ce qu'**un organe de réglage translatif (7) est associé à chaque liaison (6) sous forme de cinématique à balancier, ledit organe (7) étant relié de manière articulée avec un bras de levier (8") prolongeant ou solidaire d'une des biellettes (8) formant un côté de la cinématique à balancier (6), constituant un quadrilatère, préférentiellement un parallélogramme.

10. Machine agricole selon l'une quelconque des revendications 1 à 9, **caractérisée en ce que** chacun des outils (4), sous forme de disques rotatifs, est monté individuellement, par paire ou par groupe sur le membre support (5), par le biais d'un bras (4') et éventuellement par l'intermédiaire ou avec interposition d'au moins un élément déformable élastique.

11. Machine agricole selon l'une quelconque des revendications 1 à 10, **caractérisée en ce qu'**elle comporte deux trains (3, 3') d'outils (4) dont l'un peut être déplacé relativement par rapport au châssis (2) et à l'autre train (3, 3') dans la direction d'avance (A), sur une distance déterminée et avec blocage en position réglée.

12. Machine agricole selon l'une quelconque des revendications 1 à 11, **caractérisée en ce qu'**elle comporte deux trains (3, 3') d'outils (4) dont chacun peut être déplacé relativement par rapport au châssis (2).

## Patentansprüche

1. Landwirtschaftliche Maschine (1) zur Bodenbearbeitung, die ein Chassis (2) und mindestens zwei Sätze (3, 3') von Arbeitswerkzeugen in Form von Drehscheiben umfasst, wobei jeder Satz (3, 3') eine Aneinanderreihung von Werkzeugen (4) aus einem oder mehreren Teilen bildet, die sich im Wesentlichen quer zur normalen Vorwärtsrichtung (A) der Maschine (1) im Gebrauch erstrecken, und wobei die Sätze (3, 3') in Vorwärtsrichtung (A) wechselseitig versetzt sind, wobei die gesamten Werkzeuge (4) eines gegebenen Satzes (3, 3') oder zumindest eines Teils des Satzes direkt oder indirekt an einem gemeinsamen Tragelement (5) montiert sind, das mit dem Chassis (2) verbunden ist,
wobei mindestens eines der Tragelemente (5) mittels mindestens einer mechanischen verformbaren Verbindung (6) mit dem Chassis (2) verbunden ist, die unter der Einwirkung mindestens eines Stellglieds (7) eine Veränderung der relativen Position des Satzes (3, 3') oder des Teils des Satzes bezüglich dem Chassis (2) erlaubt,
wobei die landwirtschaftliche Maschine (1) **dadurch gekennzeichnet ist, dass** die mechanische(n) Verbindung(en) (6) dazu ausgestaltet ist(sind), eine Veränderung der Relativposition des Satzes (3, 3') oder des Teils des Satzes in Vorwärtsrichtung (A) zu erreichen, während der Angriffswinkel (α) der Werkzeuge (4) in Form von Drehscheiben beibehalten wird, die dem Satz (3, 3') oder dem Teil des Satzes zugehörig sind, die(der) von der herbeigeführten relativen Positionsveränderung betroffen ist.

2. Landwirtschaftliche Maschine nach Anspruch 1, **dadurch gekennzeichnet, dass** die mechanische(n) Verbindung(en) (6) dazu ausgestaltet ist(sind), dass ihre Verformung unter der Einwirkung des Stellglieds oder der Stellglieder (7), zumindest hinsichtlich der beiden Verschiebungsendpositionen, die Arbeitstiefe (d) der Werkzeuge (4) in Form von Drehscheiben beibehält, die dem Satz (3, 3') zugehörig sind, die von der herbeigeführten relativen Positionsveränderung betroffen ist.

3. Landwirtschaftliche Maschine nach einem der Ansprüche 1 und 2, **dadurch gekennzeichnet, dass** die mindestens eine verformbare Verbindung (6) dazu ausgestaltet ist, unter der kontrollierten Wirkung mindestens eines gesteuerten Stellglieds (7) eine geführte Verschiebung des betreffenden Satzes von Werkzeugen (3, 3') oder des betreffenden Teils des Satzes (3, 3') parallel zur Vorwärtsrichtung (A) und relativ zum Chassis (2) und zu einem anderen Satz oder einem anderen Teil des Satzes (3, 3') zu erreichen, um ihren relativen Abstand in Vorwärtsrichtung (A) zu verändern.

4. Landwirtschaftliche Maschine nach einem der Ansprüche 1 bis 3, **dadurch gekennzeichnet, dass** die oder mindestens eine der verformbaren Verbindungen mit Führung (6) aus einer Gleitschienenverbindung besteht.

5. Landwirtschaftliche Maschine nach einem der Ansprüche 1 bis 4, **dadurch gekennzeichnet, dass** die oder mindestens eine der verformbaren Verbindungen mit Führung (6) eine Auslegerkinematik ist, die beispielsweise aus zwei Stangen (8) gebildet ist, die mittels Schwenkverbindungen (8') zum einen mit dem Chassis (2) und zum anderen mit dem Tragelement (5) des Satzes oder des betreffenden Teil des Satzes verbunden sind.

6. Landwirtschaftliche Maschine nach einem der Ansprüche 1 bis 5, **dadurch gekennzeichnet, dass** das oder jedes Stellglied (7) translatorischer Art ist, dessen translatorische Betätigungsrichtung (AT) vorteilhafterweise parallel zur Verschiebungsrichtung (DDG) ist, die sich aus einer geführten Verformung der Verbindung(en) (6) ergibt, die den betreffenden Satz (3, 3') von Werkzeugen (4) oder den betreffenden Teil des Satzes (3, 3') und das Chassis (2) verbinden.

7. Landwirtschaftliche Maschine nach einem der Ansprüche 1 bis 6, **dadurch gekennzeichnet, dass** der Satz oder die Sätze (3, 3') von Werkzeugen (4), die in Bezug auf das Chassis (2) bewegbar ist (sind), mittels zweier verformbarer Verbindungen mit Führung (6) mit dem Chassis (2) verbunden ist (sind), die sich in der Nähe der gegenüberliegenden seitlichen Enden des Tragelements (5) des betreffenden Satzes (3, 3') befinden, wobei die Verformung der Verbindungen (6) und somit die relative Verschiebung des betreffenden Satzes (3, 3') durch ein einzelnes Stellglied (7) sichergestellt wird, das im Wesentlichen mittig in Bezug auf den betreffenden Satz (3, 3') positioniert ist.

8. Landwirtschaftliche Maschine nach einem der Ansprüche 1 bis 6, **dadurch gekennzeichnet, dass** der Satz/die Sätze (3, 3') von Werkzeugen (4), die in Bezug auf das Chassis (2) bewegbar ist (sind), mittels mindestens zweier verformbarer Verbindungen mit Führung (6) mit dem Chassis (2) verbunden ist(sind), wobei jeder Verbindung (6) ein translatorisches Stellglied (7) zugeordnet ist, das sich in der Nähe befindet, wobei die Betätigungsachse (AT) des letzteren vorteilhafterweise parallel zur Verschiebungsrichtung (DDG) ist, was eine Verformung der betreffenden zugeordneten Verbindung (6) zur Folge hat, wobei die Achse (AT) und die Richtung (DDG) vorzugsweise in einer selben vertikalen Ebene liegen.

9. Landwirtschaftliche Maschine nach Anspruch 5 oder einem der Ansprüche 6 bis 8, sofern er von Anspruch 4 abhängig ist, **dadurch gekennzeichnet, dass** jeder Verbindung (6) in Form einer Auslegerkinematik ein translatorisches Stellglied (7) zugeordnet ist, wobei das Glied (7) gelenkig mit einem Hebelarm (8") verbunden ist, der eine der Stangen (8) verlängert oder fest mit dieser verbunden ist, die eine Seite der Auslegerkinematik (6) bildet, die ein Viereck, vorzugsweise ein Parallelogramm bildet.

10. Landwirtschaftliche Maschine nach einem der Ansprüche 1 bis 9, **dadurch gekennzeichnet, dass** jedes der Werkzeuge (4) in Form von Drehscheiben einzeln, paarweise oder gruppenweise mittels eines Arms (4') und gegebenenfalls mittels oder unter Zwischenschaltung mindestens eines elastisch verformbaren Elements an dem Tragelement (5) montiert ist.

11. Landwirtschaftliche Maschine nach einem der Ansprüche 1 bis 10, **dadurch gekennzeichnet, dass** sie zwei Sätze (3, 3') von Werkzeugen (4) aufweist, von denen einer um einen bestimmten Abstand und in eingestellter Position arretiert in Vorwärtsrichtung (A) relativ zum Chassis (2) und zum anderen Satz (3, 3') verschoben werden kann.

12. Landwirtschaftliche Maschine nach einem der Ansprüche 1 bis 11, **dadurch gekennzeichnet, dass** sie zwei Sätze (3, 3') von Werkzeugen (4) aufweist, von denen jeder relativ zum Chassis (2) verschoben werden kann.

## Claims

1. Agricultural machine (1) for soil treatment comprising a chassis (2) and at least two trains (3, 3') of working implements in the form of rotary discs, each train (3, 3') forming a row of implements (4) in one or more parts extending substantially transversely in relation to the normal direction of advance (A) of the machine in use, and said trains (3, 3') being mutually offset in the direction of advance (A), all of the implements (4) of a given train (3, 3'), or of at least part of a train, being mounted directly or indirectly on a common support member (5) connected to the chassis (2),
at least one of the support members (5) being connected to the chassis (2) by means of at least one deformable mechanical link (6), enabling modification of the relative position of the train (3, 3'), or of the part of a train, considered in relation to the chassis (2), this being the action of at least one adjusting component (7),
agricultural machine (1) **characterised in that** the mechanical link or links (6) is/are configured to produce a modification of the relative position of the train (3, 3') or of the part of a train considered in the direction of advance (A), while preserving the angle of attack (α) of the implements (4), in the form of rotary discs, which belong to the train (3, 3') or to the part of a train concerned by the induced modification of relative position.

2. Agricultural machine according to claim 1, **characterised in that** the mechanical link or links (6) is/are configured so that its/their deformation, under the action of the adjusting component or components (7), preserves, at least considering the two end positions of displacement, the working depth (d) of the implements (4), in the form of rotary discs, which belong to the train (3, 3') concerned by the induced modification of relative position.

3. Agricultural machine according to any one of claims 1 and 2, **characterised in that** said at least one deformable link (6) is configured to produce, under the controlled action of at least one controlled adjusting component (7), guided displacement of the train of implements (3, 3') or of the part of a train (3, 3') under consideration, this being parallel to the direction of advance (A) and relatively in relation to the chassis (2) and to another train or part of a train (3, 3'), so as to modify their relative spacing in the direction of advance (A).

4. Agricultural machine according to any one of claims 1 to 3, **characterised in that** the or at least one of the deformable links with guiding (6) consists of a slide link.

5. Agricultural machine according to any one of claims 1 to 4, **characterised in that** the or at least one of the deformable links with guiding (6) consists of a trailer with walking beam, for example consisting of two connecting rods (8) connected by pivot links (8') to the chassis (2) on the one hand, and to the support member (5) of the train or part of a train concerned, on the other hand.

6. Agricultural machine according to any one of claims 1 to 5, **characterised in that** the or each adjusting component (7) is of the translational type, of which the direction of translational actuation (AT) is advantageously parallel to the direction of displacement (DDG) resulting from guided deformation of the link or links (6) connecting the train (3, 3') of implements or the part of a train (3, 3') under consideration and the chassis (2).

7. Agricultural machine according to any one of claims 1 to 6, **characterised in that** the train or trains (3, 3') of implements (4) movable in relation to the chassis (2) is/are connected to the chassis (2) by two deformable links with guiding (6), situated close to the opposite lateral ends of the support member (5) of the train (3, 3') under consideration, deformation of said links (6) and therefore relative displacement of the train (3, 3') under consideration being ensured by a single adjusting component (7) positioned substantially centrally relative to the train (3, 3') under consideration.

8. Agricultural machine according to any one of claims 1 to 6, **characterised in that** the train or trains (3, 3') of implements (4) movable in relation to the chassis (2) is/are connected to the chassis (2) by at least two deformable links with guiding (6), associated with each link (6) being a translational adjusting component (7) situated in the vicinity, the axis of actuation (AT) of the latter being advantageously parallel to the direction of displacement (DDG) resulting from deformation of the associated link (6) under consideration, said axis (AT) and said direction (DDG) being preferably situated in the same vertical plane.

9. Agricultural machine according to claim 5 or any one of claims 6 to 8 insofar as it depends on claim 4, **characterised in that** a translational adjusting component (7) is associated with each link (6) in the form of a trailer with walking beam, said component (7) being connected in an articulated manner to a lever arm (8") extending or integral with one of the connecting rods (8) forming one side of the trailer with walking beam (6), constituting a quadrilateral, preferably a parallelogram.

10. Agricultural machine according to any one of claims 1 to 9, **characterised in that** each of the implements (4), in the form of rotary discs, is mounted singly, in pairs or in groups on the support member (5), by means of an arm (4') and possibly by means of or with the interposition of at least one deformable elastic element.

11. Agricultural machine according to any one of claims 1 to 10, **characterised in that** it comprises two trains (3, 3') of implements (4), one of which can be relatively displaced in relation to the chassis (2) and to the other train (3, 3') in the direction of advance (A), over a given distance and with locking in the adjusted position.

12. Agricultural machine according to any one of claims 1 to 11, **characterised in that** it comprises two trains (3, 3') of implements (4), each of which can be relatively displaced in relation to the chassis (2).
